# EUROPÄISCHE PATENTSCHRIFT

(11) **EP 1 503 626 B1**
(45) Veröffentlichungstag und Bekanntmachung des Hinweises auf die Patenterteilung: **14.06.2006**
(21) Anmeldenummer: 03749847.4
(22) Anmeldetag: 13.05.2003
(51) Int. Cl.: A01N 63/00, A01N 65/00

(54) **ZUSAMMENSETZUNG UND VERFAHREN ZUR BESEITIGUNG VON SCHIMMELPILZBEFALL**
COMPOSITION AND METHOD FOR ELIMINATING MILDEW INFESTATION
COMPOSITION ET PROCEDE POUR ERADIQUER L'ATTAQUE FONGIQUE

(30) Priorität: 13.05.2002 DE 10221225
(43) Veröffentlichungstag der Anmeldung: 09.02.2005
(73) Patentinhaber: Georg Fritzmeier GmbH + Co. KG, 85655 Grosshelfendorf (DE)
(72) Erfinder: UPHOFF, Christian, 83299 Aschau (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2003/001537
(87) Internationale Veröffentlichungsnummer: WO 2003/094619

(56) Entgegenhaltungen:
- EP-A- 0 372 520
- WO-A-02/49971

## Beschreibung

Die vorliegende Erfindung betrifft eine Zusammensetzung zur Beseitigung von Schimmelpilzbefall gemäß Oberbegriff von Patentanspruch 1. Des weiteren betrifft die vorliegende Erfindung ein Verfahren zur Behandlung von mit Schimmelpilzen befallenen Flächen.

Schimmelpilzkeime in Form von Schimmelpilzsporen sind praktisch ständig in der Umgebungsluft vorhanden. Schimmelpilze sind mikroskopisch klein und bestehen aus schlauchförmigen Strukturen, den sog. Hyphen. Diese bilden während des Wachstums ein Geflecht, das Mycell genannt wird.

Unter den insgesamt ca. 250.000 bekannten Schimmelpilzarten sind, neben den erwünschten Speiseschimmelpilzen (Käse) und dem ungewollten Schimmel auf Nahrungsmitteln, folgende Spezies besonders hervorzuheben: Cephalosporium (dunkelgrauer Schimmelpilz), Aspergillus (gelbgrüner bis grauschwarzer Schimmelpilz), Penicillium (grüner bis türkisblauer Schimmelpilz), Alternaria (schwarzer Schimmelpilz) und, weniger häufig, Stachybotrys (schwarzer Schimmelpilz).

Die Aufnahme von Schimmelpilzen bzw. deren Sporen in den Körper erfolgt hauptsächlich über die Atmung, aber auch über damit belastete Lebensmittel, z. B. aus befallenen Kellern.

Eine Vielzahl verschiedener Krankheitsbilder können direkt oder indirekt durch Schimmelpilze bzw. deren Stoffwechselprodukte hervorgerufen werden. Nach aktuellen Forschungsergebnissen reagieren etwa 30 % aller Allergiker auf Pilzsporen. Mögliche Folge dieser Belastung sind vor allem Atemwegserkrankungen wie Asthma. Nur wenige Pilze sind direkt gesundheitsschädlich. Von etwa 100 Arten weiß man allerdings, dass sie den menschlichen Körper infizieren und schädigen können. Etwa 200 Arten erzeugen Mytoxine. Es handelt sich dabei um für den Menschen zum Teil hochgiftige Stoffwechselprodukte, die von Pilzen produziert werden.

In den letzten Jahren tritt insbesondere in Innenräumen verstärkt eine Schimmelbildung auf. Betroffen hiervon sind nicht nur Altbauten, sondern bereits auch Neubauten. Ursache dieses vermehrten Auftretens ist immer eine erhöhte Luft- und/oder Materialfeuchte, die durch verschiedene Faktoren, wie unzureichendes Lüften, Wasserrohrbrüche, feuchte Materialien, zu kurze Austrockenzeiten bei Neubauten und eine mangelnde Dampfdiffusion durch geschlossene Oberflächen, wie beispielsweise Kunststofftapeten, absperrende Außenwandanstriche, verursacht werden.

Des weiteren darf nicht außer Acht gelassen werden, dass Schimmelpilze in der Regel bei Raumtemperatur wachsen. Die Mindesttemperatur für das Mycellwachstum beträgt 0°C. Die Idealtemperatur liegt zwischen 20° und 45°C.

Bisher sind, je nach Ausmaß des Schimmelpilzbefalls, verschiedene Verfahren zu seiner Bekämpfung angewendet worden. Hier ist grundsätzlich zwischen der Schimmelbeseitigung und der Sanierung, beispielsweise von Bausubstanz, zu unterscheiden. Bei der Schimmelbeseitigung werden oftmals zum Teil hochgiftige Antischimmelmittel eingesetzt, die vielfach gesundheitsschädlich für damit in Kontakt geratende Personen sind. Des weiteren ist die Schimmelbeseitigung nur dann durchzuführen, wenn die Schimmelschäden an den jeweiligen Materialien bzw. Flächen noch nicht allzu weit fortgeschritten ist.

Bei wesentlich gravierenden Schäden, z. B. im Mauerwerk, Beton, Putz usw., werden Sanierungsmaßnahmen durchgeführt, wobei häufig absperrende Beschichtungen aufgetragen werden. Dazu zählen beispielsweise Dichtschlämme, Latexfarben und Thermomaterialien. Dabei kommt es vielfach zu weitaus größeren Schädigungen der behandelten Materialien als zuvor. Oft wird beobachtet, dass unter diesen Beschichtungen der Schimmelpilzbefall fortschreitet und damit im Laufe der Zeit eine größere Fläche mit Schimmelbefall zutage tritt.

Es ist daher Aufgabe der vorliegenden Erfindung, eine Zusammensetzung zur Schimmelpilzbekämpfung zur Verfügung zu stellen, mit der ohne gesundheitliches Risiko selbst große betroffene Flächen von Schimmelpilzbefall nachhaltig befreit werden können.

Diese Aufgabe wird mit einer Zusammensetzung gemäß Patentanspruch 1 gelöst.

Die vorliegende Erfindung betrifft eine Zusammensetzung zur Beseitigung von Schimmelpilzbefall auf der Grundlage einer mikrobiotischen Mischkultur aus photosynthetisch arbeitenden Mikroorganismen und Leuchtbakterien in einer biologischen Lösung, die durch einen Gehalt an Hopfen gekennzeichnet ist.

Die Unteransprüche betreffen bevorzugte Ausführungsformen der erfindungsgemäßen Zusammensetzung.

Die vorliegende Erfindung betrifft ebenfalls ein Verfahren zur Behandlung von mit Schimmelpilzen befallenen Flächen, das die Schritte umfasst:
- Herstellen der oben beschriebenen Zusammensetzung und
- Auftragen der Zusammensetzung auf die Fläche.

Die Unteransprüche betreffen bevorzugte Ausführungsformen des erfindungsgemäßen Verfahrens.

Der in der erfindungsgemäßen Zusammensetzung enthaltende Hopfen zeigt überraschenderweise eine abtötende Wirkung auf mit Schimmelpilzen befallene Materialien bzw. Flächen. Es gibt Hinweise darauf, dass die in der Zusammensetzung enthaltenen Mikroorganismen als Träger für den Hopfen dienen und diesen an den Schimmelpilz transportieren, wo er seine Wirksamkeit entfaltet. Es hat sich insbesondere herausgestellt, dass gerade bei Schimmelpilzbefall im Mauerwerk die Mikroorganismen den Hopfen in das Mauerwerk eindiffundieren, wo der Schimmelpilz abgetötet wird.

Es zeigte sich desweiteren, daß der Hopfen beim erfindungsgemäßen Prozeß auf die eingesetzten Mikroorganismen nicht toxisch sondern katalytisch wirkt und dadurch die Umsetzung der organischen Bestandteile des biogenen Abfalls durch die Mikroorganismen beschleunigt und verstärkt.

Die erfindungsgemäße Zusammensetzung hat den Vorteil, dass sie für die Umwelt und insbesondere für die bei der Schimmelpilzbekämpfung beteiligten Personen, absolut unschädlich ist. Dieses trifft ebenfalls auf die Personen zu, die sich in unmittelbarer Nähe der behandelten Materialien, z. B. in behandelten Räumen, aufhalten.

Sie kann, je nach Ausmaß des Schimmelbefalls, kleinflächig und auch großflächig auf die befallenen Materialien bzw. Flächen aufgetragen werden. Selbst bei großflächigen Applikationen kann beobachtet werden, dass bereits weit fortgeschrittener Schimmelbefall wirksam bekämpft werden kann, ohne dass Absperrschichten oder ein Abtrag von Material notwendig ist.

Es hat sich erfindungsgemäß herausgestellt, dass der Gehalt des Hopfens in der Zusammensetzung innerhalb relativ stark variabler Grenzen angesiedelt ist. Je nach Ausmaß des Schimmelpilzbefalls reicht es aus, wenn der Hopfen in einem nur sehr geringen Anteil in der Zusammensetzung vorhanden ist. In der Praxis hat sich herausgestellt, dass eine Menge des Hopfens in der Zusammensetzung in einem Bereich von 0,001 bis 0,1 Gew.-%, bezogen auf die Bestandteile der Zusammensetzung, geeignet ist. Bevorzugt liegt der Gehalt in einem Bereich von 0,01 bis 0,05 Gew.-%. Zugegeben werden die Dolden des Hopfens in getrockneter und pulverisierter Form.

Die erfindungsgemäße Zusammensetzung entfaltet ihre Wirksamkeit nicht zuletzt auch aufgrund der als Träger fungierenden mikrobiotischen Mischkultur, die die Basis der vorliegenden Zusammensetzung bildet. Eine derartige mikrobiotische Mischkultur ist beispielsweise in der DE 10062812 der Anmelderin beschrieben. So besteht die Mischkultur aus einer Mischung aus photosynthetisch arbeitenden (fakultativ phototrophen) Mikroorganismen und Leuchtbakterien.

Zu den photosynthetisch arbeitenden Mikroorganismen in der Mischkultur zählen beispielsweise Prochlorophyten, Cyanobakterien, grüne Schwefelbakterien, Purpurbakterien, Chloroflexus-ähnliche Formen und Heliobakterium und Heliobacillus-ähnliche Formen sowie Mischungen aus zwei oder mehr daraus.

Die in der Mischkultur enthaltenden Leuchtbakterien können beispielsweise Photobacterium phosphoreum, Vibrio fischeri, Vibrio harveyi, Pseudomonas lucifera oder Beneckea oder Mischungen aus mindestens zwei daraus sein. Hinsichtlich der Wirkungsweise dieser Mischkultur wird auf die Ausführungen in der älteren Patentanmeldung DE 10062812 (WO 02/49971) verwiesen.

Die erfindungsgemäße Zusammensetzung kann ebenfalls Additive als Nebenbestandteile enthalten. Dazu gehören beispielsweise Enzyme, Spurenelemente, Polysaccharide, Alginderivate, Flokkungsmittel, Biopolymere und andere Mikroorganismen. Sie entweder einzeln oder in Kombination eingesetzt werden.

Die erfindungsgemäße Zusammensetzung lässt sich auf herkömmliche Weise herstellen. Nach Auswahl der für die Anwendung geeigneten mikrobiotischen Mischkultur wird der Hopfen in die Mischkultur eingegeben und gerührt. Die Zusammensetzung kann, nach Bedarf, gleich zur Schimmelpilzbeseitigung verwendet werden. Es hat sich allerdings in der Praxis erwiesen, dass ein Stehenlassen über 24 bis 72 Stunden, vorzugsweise 52 Stunden die Wirksamkeit der Zusammensetzung erhöht.

Die Zusammensetzung enthält Anteile, die bei Anregung mit Licht Photosensibilisatoren freisetzen, die ihrerseits bei Anregung mit Licht in dem vorzugsweise absorbierten Wellenlängenbereich durch photochemische Reaktionen und Energieübertragungsprozesse Singulett-Sauerstoff und sonstige Radikale freisetzen, über die die Zellen der Schadstoffe aufgebrochen und zerstört werden.

Die Photosensibilisatoren werden durch die Lichteinwirkung im bevorzugt absorbierten Wellenlängenbereich aktiviert und infolge der photodynamischen Effekte durch Elektronentransfer kommt es dann zur Bildung von Singulett-Sauerstoff und Radikalen innerhalb der Zellen, die dann durch Oxidations- und Reduktionsvorgänge aufgebrochen und beschädigt werden. Die Zerstörung der Zellen kann auf zwei Arten geschehen:
- durch Nekrose, wobei die Zellen lysiert werden
- durch Apoptose, eine Art aktiven Zellen-"Selbstmord"

Die photodynamische Behandlung kann je nach Behandlungsprotokoll beide Arten von Zelltot bewirken. Die beim Aufbruch der Zellen freigesetzten Proteine und Nährstoffe gelangen in den Bio-Kreislauf und steigern die Effektivität des Verfahrens zusätzlich.

Mit der erfindungsgemäßen Zusammensetzung lässt auf effektive Weise praktisch jede Art von Schimmelpilzen bekämpfen. Beispiele für besonders im Putz- und Mauerwerk vorkommende Schimmelpilzarten sind Cladosporium, Aspergillus, Penicillium und Alternaria. Es können auch andere Spezies erfolgreich bekämpft werden, wie Mucor, Geotrichum, Candida und Crysosporium.

Das erfindungsgemäße Verfahren zur Behandlung von Flächen, die mit Schimmelpilzen befallen sind, wird in der Weise durchgeführt, dass, wie oben beschrieben, eine erfindungsgemäße Zusammensetzung hergestellt wird und diese dann auf die Fläche aufgetragen wird.

Es können in der Praxis alle Flächen bzw. Materialien mit der erfindungsgemäßen Zusammensetzung behandelt werden. Zu den betroffenen Flächen zählen beispielsweise Holz, Gips, Mauerwerk, Putz, Dämmplatten, Spanplatten, Textilien, Leder, Papier, Tapeten, Bodenbeläge und auch in einigen Fällen Kunststoffe.

Die Art des Auftragens der erfindungsgemäßen Zusammensetzung hängt in der Regel davon ab, wie groß die zu behandelnde Fläche ist und in welchem Ausmaß der Schimmelpilzbefall bereits fortgeschritten ist. Bei kleineren Flächen und auch bei weniger stark ausgeprägtem Schimmelpilzbefall kann die Zusammensetzung, die als wässrige Lösung vorliegt, durch Aufstreichen, z. B. mit einem Pinsel oder einer Rolle, aufgetragen werden.

Bei größeren Flächen hat sich als günstig erwiesen, die erfindungsgemäße Zusammensetzung feinst verteilt, das heißt, durch Aufsprühen auf die betroffene Fläche aufzutragen. Zu diesem Zweck wird die Zusammensetzung in ein Spendergerät eingeführt und mit einer Zerstäubervorrichtung auf die zu behandelnde Fläche aufgetragen.

Die erfindungsgemäße Zusammensetzung ist vielseitig verwendbar. Sie kann mit Erfolg bei der Sanierung von Mauerwerk und Gebäuden, die großflächig durch Pilzbefall beeinträchtigt sind, eingesetzt werden. Sie kann aber in der Gesundheitspflege Verwendung finden, beispielsweise durch Auftragen auf Textilien, um so, auch zur Prophylaxe, diese von gesundheits-schädlichem Schimmelbefall zu befreien.

Die erfindungsgemäße Zusammensetzung wurde im Hinblick auf ihre Wirksamkeit gegenüber Schimmelpilzen getestet. Die Testergebnisse sind der folgenden Tabelle 1 zu entnehmen. Es wurde jeweils als zu untersuchendes Material ein Stück Putz mit der erfindungsgemäßen Zusammensetzung behandelt. Das Vorkommen der Schimmelpilze in den Testmaterialien wurde vor und nach der Behandlung durch Analyse festgestellt.

### TABELLE 1

### Testergebnisse

| **Untersuchtes Material** | **Schimmelpilz** | **Vorkommen vor der Behandlung** | **Vorkommen nach der Behandlung** |
|---|---|---|---|
| Putz (Kneippraum) | Mucor spp. | Vereinzelt | ------ |
| | Geotrichum candidum | Stark | ------ |
| Putz (Aussenwand) | Geotrichum candidum | Stark | ------ |
| Putz (hinter Fliesen) | Mucor mucedo | Vereinzelt | ------ |
| | Fusarium spp. | Stark | ------ |
| | Aspergillus fumigatus | Mittelstark | ------ |
| Putz (Fussboden) | Crysosporium spp. | Vereinzelt | ------ |
| | Stemphylium spp. | Vereinzelt | ------ |
| | Cephalosporium spp. | Vereinzelt | ------ |
| Putz-Mineralfaser (Trennwand Sauna-Schwimmbecken) | Cephalosporium spp. | Mittelstark | ------ |
| | Aspergillus glaucus | Mittelstark | ------ |
| | Geotrichum candidum | Stark | ------ |

Wie aus Tabelle 1 ersichtlich ist, war das untersuchte Material nach der Behandlung mit der erfindungsgemäßen Zusammenset-zung vollständig schimmelpilzfrei. Dieses konnte insbesondere auch bei Testmaterialien beobachtet werden, die stark mit Schimmelpilzen befallen waren.

Es wird eine Zusammensetzung beschrieben, die für die Beseitigung von Schimmelpilzbefall geeignet ist. Sie enthält in einer mikrobiotischen Mischkultur aus photosynthetisch arbeitenden Mikroorganismen und Leuchtbakterien einen Gehalt an Hopfen. Es wird außerdem ein Verfahren zur Behandlung von mit Schimmelpilzen befallenen Flächen beschrieben.

## Patentansprüche

1. Zusammensetzung zur Beseitigung von Schimmelpilzbefall auf der Grundlage einer mikrobiotischen Mischkultur aus photosynthetisch arbeitenden Mikroorganismen und Leucht-bakterien in einer biologischen Lösung, **gekennzeichnet durch** einen Gehalt an Hopfen.

2. Zusammensetzung nach Anspruch 1, **dadurch gekennzeichnet, dass** der Hopfen in einer Menge von 0,001 bis 0,1 Gew.-%, bezogen auf die Bestandteile der Zusammensetzung, enthalten ist.

3. Zusammensetzung nach Anspruch 2, **dadurch gekennzeichnet, dass** der Gehalt an Hopfen in einem Bereich von 0,01 bis 0,05 Gew.-% beträgt.

4. Zusammensetzung nach mindestens einem der Ansprüche 1 bis 3, **dadurch gekennzeichnet, dass** in der Mischkultur als photosynthetisch arbeitende Mikroorganismen Prochlorophyten, Cyanobakterien, grüne Schwefelbakterien, Purpurbakterien, Chloroflexus-ähnliche Formen und Heliobakterium und Heliobacillus-ähnliche Formen sowie Mischungen aus zwei oder mehr daraus enthalten sind.

5. Zusammensetzung nach mindestens einem der Ansprüche 1 bis 4, **dadurch gekennzeichnet dass** in der Mischkultur als Leuchtbakterien Photobacterium phosphoreum, Vibrio fischeri, Vibrio harveyi, Pseudomonas lucifera oder Beneckea oder Mischungen aus mindestens zwei daraus enthalten sind.

6. Zusammensetzung nach mindestens einem der Patentansprüche 1 bis 5, wobei sie weiterhin als Nebenbestandteile Enzyme, Spurenelemente, Polysaccharide, Alginderivate, Flokkungmittel, Biopolymere, andere Mikroorganismen, entweder einzeln oder in Kombination, enthält.

7. Nicht-therapeutisches Verfahren zur Behandlung von mit Schimmelpilzen befallenen Flächen, mit den Schritten:
- Herstellen einer Zusammensetzung nach mindestens einem der Ansprüche 1 bis 6 und
- Auftragen der Zusammensetzung auf die Fläche

8. Verfahren nach Anspruch 7, **dadurch gekennzeichnet, dass** als Flächen Holz, Gips, Mauerwerk, Putz, Dämmplatten, Spanplatten, Textilien, Leder, Papier, Tapeten, Bodenbeläge und Kunststoffe behandelt werden.

9. Verfahren nach Anspruch 7 oder 8, **dadurch gekennzeichnet, dass** die Zusammensetzung durch Aufsprühen oder Aufstreichen aufgetragen wird.

10. Nicht-therapeutische Verwendung der Zusammensetzung nach mindestens einem der Ansprüche 1 bis 6 in der Gesundheitspflege und Sanierung von Mauerwerk und Gebäuden.

## Claims

1. A composition for eliminating mildew infestation, based on a microbiotic mixed culture of photosynthetically active microorganisms and luminescent bacteria in a biological solution, **characterised by** a hop content.

2. A composition according to claim 1, **characterised in that** the hop is contained in an amount of 0.001 to 0.1 wt.% based on the constituents of the composition.

3. A composition according to claim 2, **characterised in that** the hop content ranges from 0.01 to 0.05 wt.%.

4. A composition according to at least one of claims 1 to 3,
**characterised in that** prochlorophytes, cyanobacteria, green sulphur bacteria, purple bacteria, chloroflexus-like forms and heliobacterium and heliobacillus-like forms and also mixtures of two or more thereof are contained in the mixed culture as photosynthetically active microorganisms.

5. A composition according to at least one of claims 1 to 4, **characterised in that** Photobacterium phosphoreum, Vibrio fischeri, Vibrio harveyi, Pseudomonas lucifera or Beneckea or mixtures of at least two thereof are contained in the mixed culture as luminescent bacteria.

6. A composition according to at least one of claims 1 to 5, wherein it also contains, as minor constituents, enzymes, trace elements, polysaccharides, algin derivatives, flocculents, biopolymers, other microorganisms, either individually or in combination.

7. A non-therapeutic method of treating surfaces infested with mildew, comprising the steps of:
- preparing a composition according to at least one of claims 1 to 6, and
- applying the composition to the surface.

8. A method according to claim 7, **characterised in that** the surfaces treated are wood, gypsum, masonry, plaster, insulating boards, chipboards, textiles, leather, paper, wall coverings, floor coverings and synthetic materials.

9. A method according to claim 7 or 8, **characterised in that** the composition is applied by spraying or brushing it on.

10. A non-therapeutic use of the composition according to at least one of claims 1 to 6 in health care and in the renovation of masonry and buildings.

## Revendications

1. Composition pour l'éradication des attaques fongiques sur la base d'une culture microbiotique mixte de micro-organismes à activité photosynthétique et de bactéries luminescentes dans une solution biologique, **caractérisée par** la présence de houblon.

2. Composition selon la revendication 1, **caractérisée en ce que** le houblon est contenu en une quantité de 0,001 à 0,1 % en poids rapportée aux constituants de la composition.

3. Composition selon la revendication 2, **caractérisée en ce que** la teneur en houblon se situe entre 0,01 et 0,05 % en poids.

4. Composition selon au moins l'une des revendications 1 à 3, **caractérisée en ce que** dans la culture mixte sont contenus comme micro-organismes à activité photosynthétique des prochlorophytes, des cyanobactéries, des thiobactéries vertes, des bactéries pourpres, des formes analogues au chloroflexus, des bactéries phototrophes et des formes analogues à Heliobacillus, ainsi que des mélanges de deux ou plusieurs d'entre eux.

5. Composition selon au moins l'une des revendications 1 à 4, **caractérisée en ce que** dans la culture mixte sont contenues comme bactéries luminescentes Photobacterium phosphoreum, Vibrio fischeri, Vibrio harveyi, Pseudomonas lucifera ou Beneckea ou des mélanges de deux ou plusieurs d'entre elles.

6. Composition selon au moins l'une des revendications 1 à 5, laquelle contient en outre comme composants secondaires des enzymes, des éléments traces, des polysaccharides, des dérivés de l'acide alginique, des agents floculants, des biopolymères, d'autres micro-organismes, soit seuls soit en association.

7. Procédé non thérapeutique pour le traitement de surfaces infestées par les moisissures, comprenant les étapes de :
- fabrication d'une composition selon au moins l'une des revendications 1 à 6, et
- application de la composition sur la surface.

8. Procédé selon la revendication 7, **caractérisé en ce que**, comme surfaces, sont traités le bois, le plâtre, la maçonnerie, le crépi, les panneaux isolants, les panneaux d'aggloméré, les textiles, le cuir, le papier, le papier peint, les revêtements de sol et les plastiques.

9. Procédé selon la revendication 7 ou 8, **caractérisé en ce que** la composition est appliquée par aspersion ou application à la brosse.

10. Utilisation non thérapeutique de la composition selon au moins l'une des revendications 1 à 6 dans les soins d'hygiène et d'assainissement de maçonneries et de bâtiments.
